# FASCICULE DE BREVET EUROPEEN

(11) **EP 2 065 319 B1**
(45) Date de publication et mention de la délivrance du brevet: **09.02.2011**
(21) Numéro de dépôt: 08169352.5
(22) Date de dépôt: 18.11.2008
(51) Int. Cl.: B65G 47/244

(54) **Procédé et dispositif pour orienter des produits sur un convoyeur**
Verfahren und Vorrichtung zur Ausrichtung von Produkten auf einem Förderband
Method and device for guiding products on a conveyor

(30) Priorité: 29.11.2007 FR 0708326
(43) Date de publication de la demande: 03.06.2009
(73) Titulaire: SIDEL PARTICIPATIONS, 76930 Octeville sur Mer (FR)
(72) Inventeur: Begin, Michel, 76930 Octeville-sur-Mer (FR); Guelaud, Sébastien, 76930 Octeville-sur-Mer (FR)
(74) Mandataire: Cabinet Plasseraud

(56) Documents cités:
- WO-A-2007/135498
- BE-A3- 1 013 751
- US-A- 3 462 001

## Description

La présente invention concerne un procédé pour orienter des produits de forme non circulaire, ovale par exemple, qui se déplacent en file indienne, transportés par un convoyeur selon le préambule de la revendication 1; elle concerne également un dispositif de mise en oeuvre dudit procédé, selon le préambule de la revendication 4. Un tel procédé est décrit dans le document US 3462001.

En sortie de machine de remplissage ou d'étiqueteuse, ces produits, du genre flacons, sont alignés dans leur sens longitudinal sur le convoyeur mais, lorsqu'ils arrivent dans une zone de groupage, d'accumulation ou autre, ils ne parviennent pas toujours à se positionner de façon régulière, bien ordonnée, en épis, par exemple.

Ils peuvent s'arc'bouter les uns par rapport aux autres avec des orientations inversées et, dans ce cas, leur écartement n'est pas régulier.

Lors de leur prise en charge pour réaliser l'opération d'encaissage, par exemple, des incidents peuvent se produire et interrompre la chaîne de fabrication.

Il est connu de modifier l'orientation de produits, comme décrit dans le document WO 2007/135498, par exemple, mais selon le type de produits, les moyens à appliquer peuvent varier considérablement.

La présente invention propose un procédé et des moyens qui permettent de réaliser automatiquement un traitement systématique de ces flacons avant qu'ils n'atteignent leur zone de groupage et/ou d'accumulation, au niveau de laquelle ils sont placés en épis.

Ce traitement permet de réaliser une pré-orientation identique pour tous les flacons, sans risque d'erreurs, et ce traitement à pour résultat de faire fonctionner les chaînes de fabrication de façon rapide et efficace, sans heurts ni incidents.

Selon l'invention, le procédé de traitement des flacons consiste:
- à faire avancer lesdits flacons en file indienne, espacés et placés en long sur le convoyeur du dispositif,
- à introduire les produits dans un goulet dont la partie aval comporte des organes rotatifs, en forme de galets motorisés, lesquels galets sont disposés en vis-à-vis de part et d'autre du passage desdits flacons et ils sont animés en rotation autour d'un axe vertical,
- à appliquer lesdits galets sur les faces opposées de chaque flacon à traiter,
- à animer l'un des galets avec une certaine vitesse périphérique, ledit galet faisant office de galet passif,
- à animer l'autre galet, qui fait office de galet actif, avec une vitesse périphérique supérieure à celle dudit galet passif de façon à provoquer une sorte "d'enroulement" et de pivotement du flacon sur ledit galet passif pour le pré-orienter en biais sur le convoyeur, avant le poste de regroupement.

Selon une disposition préférentielle de l'invention, la vitesse périphérique du galet passif correspond à la vitesse de transport des flacons sur le convoyeur, pour ne pas perturber la cadence.

Toujours selon l'invention, le procédé consiste à effectuer un décalage latéral des flacons, avant de les introduire dans le goulet, vers le côté où se situe le galet actif, lequel décalage préalable permet d'ajuster la position desdits flacons en sortie, dès leur passage entre les galets, compte-tenu du fait que leur axe se déplace du côté du galet actif lors de son mouvement de pivotement et d'enroulement sur le galet passif.

L'invention concerne aussi les moyens qui permettent de mettre en oeuvre l'invention et en particulier un dispositif qui comprend, disposé au-dessus du convoyeur, un goulet constitué de deux bras écartés et mobiles l'un par rapport à l'autre entre lesquels passent les flacons à traiter, lesquels bras sont portés chacun par un caisson qui est lui-même guidé transversalement sur un bâti et chaque bras comporte un organe rotatif en forme de galet(s) motorisé(s), lequel galet est centré sur un axe vertical qui est parallèle à l'axe desdits flacons et ces galets sont positionnés en vis-à-vis pour être chacun en contact avec une face latérale desdits flacons, lesdits galets étant animés d'une vitesse différente l'un par rapport à l'autre.

Selon une autre disposition de l'invention, chaque galet est animé par un organe moteur, avec des moyens pour faire varier leur vitesse de rotation en fonction, notamment, de la vitesse de transport des flacons sur le convoyeur, de la forme desdits flacons et de l'angle d'orientation que l'on souhaite leur donner en sortie du goulet.

Toujours selon l'invention, le dispositif comporte des moyens pour régler la position initiale des bras par rapport au convoyeur et en particulier leur écartement pour l'adapter à l'épaisseur des flacons, lequel écartement est sensiblement inférieur à ladite épaisseur des flacons.

Selon une autre disposition de l'invention, le dispositif comporte des moyens qui permettent de régler la position des galets en hauteur par rapport au niveau du convoyeur sur lequel sont posés les flacons et par rapport à la taille de ces derniers.

Toujours selon invention, le dispositif comporte un bras qui est fixe pendant l'opération de traitement des flacons et l'autre bras, le bras porteur du galet actif, est mobile, soumis en permanence à un système de rappel élastique qui applique ledit galet actif sur les flacons.

Selon une autre disposition de l'invention, le dispositif comporte des moyens pour décaler latéralement les flacons, sur le convoyeur, en amont du goulet, ledit décalage s'effectuant vers le côté où se situe le galet actif pour permettre un recentrage desdits flacons, après leur passage dans ledit goulet.

Mais l'invention sera encore détaillée à l'aide de la description suivante et des dessins annexés, donnés à titre indicatif, et dans lesquels :
- la figure 1 est une vue en plan schématique du dispositif de mise en oeuvre du procédé selon l'invention;
- la figure 2 est une élévation schématique du dispositif, lequel dispositif est associé, tel un accessoire, à un convoyeur qui transporte les produits particuliers du genre flacons.

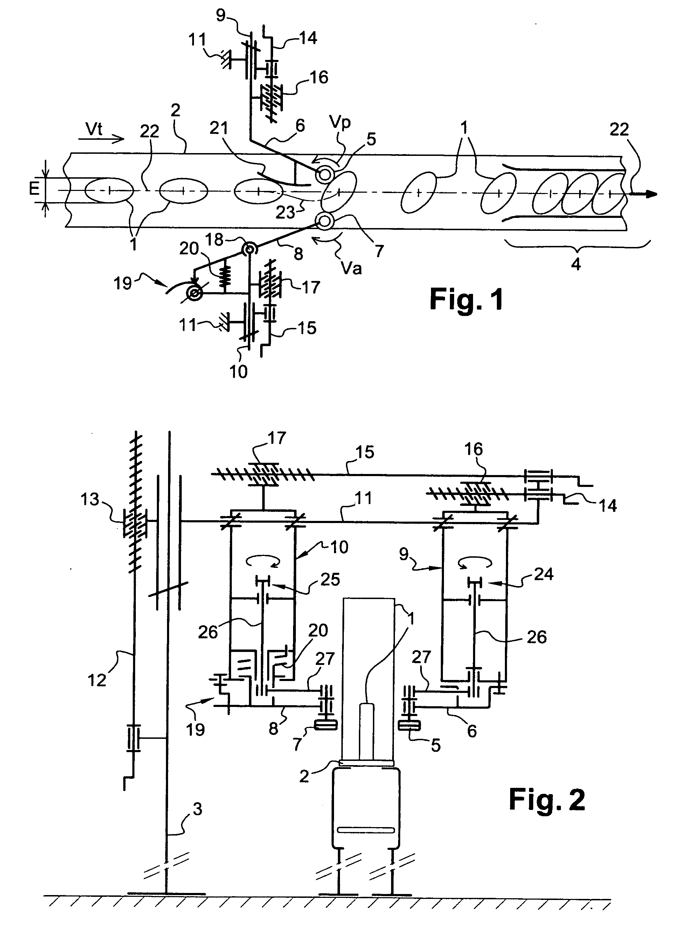

Les produits particuliers en question sont en fait des flacons (1) qui apparaissent figures 1 et 2. Ces flacons (1) ont une forme ovale ou une forme polygonale qui peut nécessiter une orientation, rectangulaire, par exemple, avec des arrondis dans les angles.

Il s'agit de flacons dont la section au niveau de leur surface de contact, entre eux, les rend instables sur le plan de leur orientation dès qu'ils se touchent. C'est le cas, notamment, des flacons qui ont une section de forme ovale ou équivalente, et dont les contenance vont de 100 ml à 5 litres, par exemple, comme visibles figure 2 sur le tapis du convoyeur (2).

Le dispositif selon l'invention permet de réaliser un traitement original de pré-orientation de ces flacons (1); il est, par exemple, installé entre une machine de préparation des flacons (1) remplisseuse ou étiqueteuse, et une machine de regroupage et/ou de conditionnement desdits flacons. Ce dispositif comporte un châssis (3) et il est associé au convoyeur (2) qui transporte les flacons (1) entre les deux machines précitées.

Les flacons (1) sont disposés longitudinalement sur le convoyeur (2) qui les transporte à une vitesse Vt appropriée; ils sont espacés sur ce convoyeur (2) et, après leur traitement par le dispositif selon l'invention, ils progressent vers le poste (4) d'accumulation de la machine de regroupage et/ou de conditionnement, par exemple.

Le traitement infligé par le dispositif selon l'invention consiste à faire pivoter les flacons (1) sur le convoyeur (2) sans les arrêter; ce traitement s'effectue à la volée en faisant passer les flacons (1) dans une sorte de goulet au niveau duquel ils vont prendre une nouvelle orientation, plus facile à gérer, en épis, qui leur permet de se positionner sans erreur au niveau du poste (4) d'accumulation.

Ce goulet est constitué de deux organes rotatifs en forme de galets qui sont disposés en vis-à-vis de part et d'autre du passage des flacons (1): - un galet (5) qui est porté par un bras (6) et - un galet (7) qui est porté par un bras (8).

Ces galets (5) et (7) sont disposés sur des axes verticaux, perpendiculaires au convoyeur (2) et ils sont motorisés individuellement pour agir sur les flancs des flacons (1) au moment de leur passage. Ces deux galets (5) et (7) enserrent le flacon (1) au moment de son passage, avec une pression prédéterminée et au moyen d'organes qui seront détaillés plus loin dans la description.

Le galet (5), que l'on peut qualifier de galet passif, accompagne les flacons (1) lors de leur passage; sa vitesse circonférentielle Vp correspond, de préférence, à la vitesse Vt de transport desdits flacons par le convoyeur (2), pour ne pas perturber ce transport et les cadences.

Le galet (7), que l'on peut qualifier de galet actif, tend à accélérer les flacons (1) au moment de leur passage en leur donnant une petite impulsion. Sa vitesse circonférentielle Va est variable en fonction de la forme des flacons et de l'angle d'orientation souhaité pour ces derniers, en sortie du goulet.

Lors de son passage entre les deux galets (5) et (7), le flacon (1) est soumis à un effet de couple; il se colle sur le galet (5) qui est passif pendant que le galet (7) qui est actif "l'enroule" et le fait pivoter sur ledit galet (5) du fait de la différence de vitesse entre les deux galets.

Lorsque ce traitement du flacon (1) par les deux galets (5) et (7) est terminé, ledit flacon a pris une position orientée angulairement sur le convoyeur (2), laquelle position est plus propice à une accumulation en ligne et en épis, sur une file.

L'efficacité et la précision de ce traitement requiert une grande précision au niveau de la position des deux galets (5) et (7) et au niveau du réglage de leur vitesse de rotation.

Globalement, les galets (5) et (7) sont disposés à la partie aval du goulet en Vé, portés par les bras (6) et (8) respectivement, comme indiqué précédemment; lesquels bras (6) et (8) forment ledit goulet dans lequel pénètrent les flacons (1). Ces deux bras (6) et (8) sont eux-mêmes portés par des structures en forme de caissons (9) et (10) respectivement; lesquels caissons (9) et (10) sont installés sur un bâti (11) qui est disposé transversalement au-dessus du convoyeur (2), lequel bâti (11) est lui-même guidé sur le châssis (3) du dispositif.

Dans le détail, le bâti (11) est guidé verticalement sur le châssis (3) et il est mobile par l'intermédiaire de moyens appropriés du genre vis-écrou, par exemple. Sur le schéma, figure 2, la vis (12) est solidaire du châssis (3) et l'écrou (13) est solidaire du bâti (11). Ce déplacement vertical du bâti (11) permet de régler la position en hauteur des deux galets (5) et (7) par rapport au niveau du convoyeur (2) et par rapport aux flacons (1), en fonction de leur taille, notamment.

Les caissons (9) et (10) sont guidés horizontalement sur le bâti (11) et ils sont tous les deux mobiles transversalement par des moyens appropriés du genre vis-écrou. Sur le schéma, les deux vis (14) et (15) sont solidaires du bâti (11) et les écrous (16) et (17) sont solidaires, respectivement, desdits caissons (9) et (10). Ce déplacement transversal des caissons (9) et (10) permet de régler la position des deux galets (5) et (7) par rapport au convoyeur (2) et aux flacons (1) qui sont sur ce dernier; il permet en fait de régler l'écartement entre lesdits galets et l'axe de sortie des produits sur le convoyeur (2).

Cet écartement entre les deux galets (5) et (7) est fonction de l'épaisseur des flacons (1) et il dépend aussi de la dimension et de la forme de ces flacons. L'écartement de ces galets (5) et (7) est inférieur à l'épaisseur transversale E des flacons (1) et il est variable, d'une part, en fonction de cette épaisseur, de la forme et de la consistance desdits flacons et, d'autre part, en fonction de l'angle d'orientation souhaité en sortie du goulet.

Cet écartement est ajustable au moyen d'un réglage complémentaire qui peut être appliqué au bras 8 qui porte le galet (7) actif. Ce bras (8) est articulé sous le caisson (10) autour d'un axe vertical (18) et sa position angulaire est établie par une butée (19) disposée sur le caisson (10). Cette position angulaire est ajustable au moyen de la butée (19) qui se présente sous la forme d'un excentrique et elle est maintenue par un organe de rappel élastique (20). L'organe élastique (20) est un ressort qui, comme représenté figure 2, est du type hélicoïdal de torsion, interposé entre le bras (8) et le caisson (10).

Lorsqu'un flacon (1) passe entre les deux galets (5) et (7), le galet (7) actif s'écarte au fur et à mesure de la rotation dudit flacon et il revient automatiquement en position après le traitement de pré-orientation.

La position du galet (5) qui est passif peut être fixe pour servir de référence au positionnement du flacon (1) sur le convoyeur (2). Ce galet (5) est porté par le bras (6) qui est solidaire du caisson (9).

On remarque, figure 1, que le bras (6) comporte, en amont du galet (5), un moyen (21) en forme de guide, pour décaler légèrement les flacons (1), en les déplaçant transversalement, avant leur entrée dans le goulet et leur rencontre avec les deux galets (5) et (7).

Le chemin des flacons (1) est légèrement décalé par rapport à l'axe longitudinal médian (22) du convoyeur (2), du côté du galet (7) actif. Le décalage de ce chemin, qui est repéré (23) sur la figure 1, a une valeur la plus proche possible de celle du déplacement de l'axe du flacon lors de son mouvement de pivotement sur le galet (5) passif, lequel décalage permet d'ajuster la position des flacons (1) en sortie, après leur passage entre les galets (5) et (7) et en particulier de les positionner sur la ligne longitudinale médiane du convoyeur.

Les galets (5) et (7) sont entrâmes chacun par les moteurs (24) et (25), respectivement, comme schématisés figure 2. Ces moteurs sont associés à des moyens de commande appropriés pour faire varier et adapter leur vitesse de rotation en fonction, notamment, de la forme des produits et de leur vitesse d'évolution avec le convoyeur (2).

Ces moteurs (24) et (25) sont logés dans les caissons (9) et (10).

La liaison entre les moteurs (24) et (25) et les galets (5) et (7), respectivement, s'effectue au moyen d'arbres (26) qui s'étendent verticalement dans les caissons (9) et (10) et de courroies (27) qui s'interposent entre lesdits arbres et lesdits galets.

Pour des raisons de sécurité, les bras (6) et (8) sont tubulaires et les courroies (27) sont logées dans lesdits bras.

Dans un but de simplification de la construction de ce type de dispositif, les deux bras (6) et (8) peuvent être réalisés de façon symétrique, de même que les caissons (9) et (10). La différence entre ces deux ensembles bras-galets, portera sur le choix du galet (5) passif, c'est-à-dire du galet qui fera office de référence pour le positionnement des flacons (1) sur le convoyeur (2).

## Revendications

1. Procédé de traitement pour orienter des produits du genre flacons (1), dont la section horizontale de contact est du genre ovale et qui sont transportés, dans leur sens longitudinal, en file indienne et espacés sur un convoyeur (2), **caractérisé en ce qu'**il consiste:
- à introduire, les uns après les autres, lesdits flacons (1) dans un goulet dont la partie aval comporte des organes rotatifs, du genre galets (5), (7) motorisés, lesquels galets sont disposés en vis-à-vis de part et d'autre du passage desdits flacons et ils sont animés en rotation autour d'un axe vertical,
- à appliquer lesdits galets (5) et (7) sur les faces opposées de chaque flacon à orienter,
- à animer l'un des galets, le galet (5), avec une vitesse Vp périphérique, ledit galet (5) faisant office de galet passif,
- à animer l'autre galet (7), qui fait office de galet actif, avec une vitesse Va périphérique supérieure à celle dudit galet (5) passif de façon à provoquer une sorte "d'enroulement" et de pivotement du flacon (1) sur ledit galet (5) passif pour le placer en biais sur le convoyeur (2).

2. Procédé de traitement selon la revendication 1, **caractérisé en ce qu'**il consiste à animer le galet (5) passif avec une vitesse périphérique qui correspond à la vitesse Vt de transport des flacons (1) sur le convoyeur (2).

3. Procédé de traitement selon la revendication 1, **caractérisé en ce qu'**il consiste à effectuer un décalage latéral des flacons (1), avant de les introduire dans le goulet, vers le côté où se situe le galet (7) actif, lequel décalage permet d'ajuster la position desdits flacons en sortie, dès leur passage entre les galets (5, 7).

4. Dispositif pour la mise en oeuvre du procédé de traitement de produits du genre flacons (1) selon l'une quelconque des revendications 1 à 3, **caractérisé en ce qu'**il comprend, au-dessus du convoyeur (2), un goulet constitué de deux bras (6) et (8) écartés et mobiles l'un par rapport à l'autre entre lesquels passent lesdits flacons, lesquels bras (6) et (8) sont portés chacun par un caisson (9), (10), respectivement, lesquels caissons sont guidés transversalement sur un bâti (11) et chaque bras comporte un organe rotatif en forme de galet (5, 7) motorisé, lesquels galets (5) et (7) sont centrés sur un axe vertical qui est parallèle à l'axe desdits flacons (1) et ils sont positionnés en vis-à-vis pour être chacun en contact avec une face latérale desdits flacons (1), lesdits galets (5), (7), étant animés d'une vitesse périphérique différente l'un par rapport à l'autre.

5. Dispositif selon la revendication 4, **caractérisé en ce que** l'entraînement de chaque galet (5), (7), s'effectue par un organe moteur (24), (25), respectivement, avec des moyens pour faire varier leur vitesse de rotation en fonction, notamment, de la vitesse de transport, de la forme des flacons (1) et de l'angle d'orientation souhaité en sortie du goulet.

6. Dispositif selon la revendication 4, **caractérisé en ce qu'**il comporte des moyens pour régler la position initiale des bras (6), (8), et en particulier leur écartement, pour l'adapter à l'épaisseur des flacons (1), lequel écartement est sensiblement inférieur à ladite épaisseur desdits flacons.

7. Dispositif selon la revendication 4, **caractérisé en ce qu'**il comporte des moyens qui permettent de régler la position des galets (5, 7), en hauteur, par rapport au niveau du convoyeur (2) et en fonction de la taille des flacons (1).

8. Dispositif selon la revendication 4, **caractérisé en ce qu'**il comporte un bras (6) qui est fixe pendant l'opération de traitement des flacons (1) et l'autre bras (8) est mobile, soumis à un système (20) de rappel élastique.

9. Dispositif selon la revendication 4, **caractérisé en ce qu'**il comporte des moyens (21) pour décaler latéralement les flacons (1) en amont des galets (5) et (7), ledit décalage s'effectuant vers le côté où se situe le galet (7) actif pour permettre un recentrage desdits flacons, après leur passage dans le goulet, sur le convoyeur (2).

## Claims

1. Manipulation method for orientating products such as bottles (1) whose horizontal cross section of contact is of oval type and which are conveyed, in their longitudinal direction, in single file, spaced apart on a conveyor (2), said method being **characterized in that** it consists in:
- introducing said bottles (1) one by one into a neck, at the downstream end of which are rotary members such as motorized rollers (5), (7), which rollers are positioned on either side of the passage of said bottles and rotated about a vertical axis,
- applying said rollers (5) and (7) to the opposite faces of each bottle to be orientated,
- giving one of the rollers, roller (5), a peripheral speed Vp, said roller (5) acting as a passive roller, and
- giving the other roller (7), which acts as an active roller, a peripheral speed Va higher than that of said passive roller (5) in order to produce a sort of "rolling" and pivoting of the bottle (1) around said passive roller (5) to position it diagonally on the conveyor (2).

2. Manipulation method according to Claim 1, **characterized in that** it consists in giving the passive roller (5) a peripheral speed equal to the speed Vt of conveyance of the bottles (1) on the conveyor (2).

3. Manipulation method according to Claim 1, **characterized in that** it consists in offsetting the bottles (1) sideways before introducing them into the neck, towards the active roller (7), which offset allows the position of said bottles to be adjusted as they pass out from between the rollers (5, 7).

4. Device for carrying out the method for manipulating products such as bottles (1) according to any one of claims 1-3, **characterized in that** it comprises, above the conveyor (2), a neck consisting of two arms (6) and (8) spaced apart and movable relative to each other, between which said bottles pass, which arms (6) and (8) are each carried by a box (9), (10), respectively, which boxes are guided transversely on a structure (11) and each arm comprises a rotary member in the form of a motorized roller (5, 7), which rollers (5) and (7) are coaxial with a vertical spindle parallel to the axis of said bottles (1) and the rollers are positioned opposite each other so that each is in contact with a lateral face of said bottles (1), said rollers (5), (7) being given a different peripheral speed from each other.

5. Device according to Claim 4, **characterized in that** each roller (5), (7) is driven by a motor member (24), (25), respectively, with means for varying their speed of rotation as a function, in particular, of the speed of conveyance, the shape of the bottles (1) and the desired angle of orientation at the exit of the neck.

6. Device according to Claim 4, **characterized in that** it comprises means for adjusting the initial position of the arms (6), (8), and in particular the distance between them, to adapt it to the thickness of the bottles (1), which distance is substantially less than said thickness of said bottles.

7. Device according to Claim 4, **characterized in that** it comprises means that make it possible to adjust the position of the rollers (5, 7), in height, relative to the conveyor (2) and as a function of the size of the bottles (1).

8. Device according to Claim 4, **characterized in that** it comprises one arm (6) that is stationary throughout the bottle (1) manipulating operation and the other arm (8) is movable but subjected to an elastic return system (20).

9. Device according to Claim 4, **characterized in that** it comprises means (21) for offsetting the bottles (1) sideways upstream of the rollers (5) and (7), said offset being towards the active roller (7) to allow said bottles to be recentred after they have passed through the neck, on the conveyor (2).

## Patentansprüche

1. Behandlungsverfahren zum Orientieren von Produkten vom Flakon-Typ (1), deren horizontaler Kontaktquerschnitt vom ovalen Typ ist, und die in ihrer Längsorientierung im Gänsemarsch und beabstandet auf einem Förderband (2) transportiert werden, **dadurch gekennzeichnet, dass** es beinhaltet:
- Einführen, einen nach dem anderen, der Flakons (1) in eine Verengung, deren stromabwärtiger Teil Rotationselemente vom Typ motorisierter Rollen (5, 7) trägt, wobei die Rollen gegenüberliegend zu beiden Seiten eines Durchgangs der Flakons angeordnet sind und sie um eine Vertikalachse in Drehung versetzt werden,
- Anlegen der Rollen (5 und 7) an die gegenüberliegenden Flächen jedes auszurichtenden Flakons,
- Bewegen einer der Rollen, der Rolle (5), mit einer Peripherie-Geschwindigkeit Vp, wobei die Rolle (5) als passive Rolle arbeitet,
- Bewegen der anderen Rolle (7), die als aktive Rolle dient, mit einer Peripherie-Geschwindigkeit Va höher als derjenigen der passiven Rolle (5), um eine Art "Wickeln" und Schwenkung des Flakons (1) an der passiven Rolle (5) hervorzurufen, um ihn schräg auf dem Förderband (2) zu platzieren.

2. Behandlungsverfahren gemäß Anspruch 1, **dadurch gekennzeichnet, dass** es beinhaltet: Bewegen der passiven Rolle (5) mit einer Peripherie-Geschwindigkeit, die der Transport-Geschwindigkeit Vt von Flakons (1) auf dem Förderband (2) entspricht.

3. Behandlungsverfahren gemäß Anspruch 1, **dadurch gekennzeichnet, dass** es beinhaltet: Bewirken einer Lateralverschiebung von Flakons (1), bevor sie in die Rolle eingeführt werden, zu der Seite hin, wo sich die aktive Rolle (7) befindet, wobei die Verschiebung das Justierten der Position besagter Flakons beim Verlassen ihres Durchgangs zwischen den Rollen (5, 7) gestattet.

4. Vorrichtung zum Umsetzen des Behandlungsverfahrens von Produkten des Typs Flakon gemäß einem der Ansprüche 1 bis 3, **dadurch gekennzeichnet, dass** es umfasst, oberhalb des Transportbandes (2), eine durch zwei in Relation zueinander beabstandete und bewegliche Arme (6 und 8) gebildete Verengung, zwischen denen die Flakons passieren, wobei die Arme (6 und 8) beide durch ein Gehäuse (9 bzw. 10) getragen sind, wobei die Gehäuse transversal auf einem Rahmen (11) geführt sind und jeder Arm einen Drehkörper in Form einer motorisierten Rolle (5, 7) trägt, wobei die Rollen (5 und 7) auf einer vertikalen Achse zentriert sind, die parallel zur Achse der Flakons (1) ist und sie gegenüberliegend positioniert sind, damit jede in Kontakt mit einer seitlichen Fläche der Flakons (1) ist, wobei die Rollen (5, 7) mit einer Peripherie-Geschwindigkeit bewegt werden, die sich relativ zueinander unterscheidet.

5. Vorrichtung gemäß Anspruch 4, **dadurch gekennzeichnet, dass** der Antrieb jeder Rolle (5, 7) durch ein Motorelement (24 bzw. 25) stattfindet, mit Mitteln, um ihre Rotationsgeschwindigkeit insbesondere als Funktion der Geschwindigkeit des Transportes, der Form der Flakons (1) und des beim Verlassen der Verengung gewünschten Orientierungswinkels variabel zu machen.

6. Vorrichtung gemäß Anspruch 4, **dadurch gekennzeichnet, dass** sie Mittel zum Regeln der Anfangsposition der Arme (6, 8) und insbesondere ihren Abstand umfasst, um sie an die Dicke der Flakons (1) anzupassen, wobei diese Entfernung deutlich kleiner als die besagte Dicke besagter Flakons ist.

7. Vorrichtung gemäß Anspruch 4, **dadurch gekennzeichnet, dass** sie Mittel umfasst, die es gestatten, die Position der Rollen (5, 7) in ihrer Höhe in Bezug auf das Niveau des Transportbands (2) und als Funktion der Weite der Flakons (1) zu regeln.

8. Vorrichtung gemäß Anspruch 4, **dadurch gekennzeichnet, dass** sie einen Arm (6) umfasst, der während des Behandlungsvorgangs von Flakons (1) fest ist, und der andere Arm (8) beweglich und einem System (20) der elastischen Rückholung unterworfen ist.

9. Vorrichtung gemäß Patentanspruch 4, **dadurch gekennzeichnet, dass** sie Mittel (21) zum lateralen Verschieben der Flakons (1) stromaufwärts der Rollen (5 und 7) umfasst, wobei die Verschiebung zu dem Rand stattfindet, wo sich die aktive Rolle (7) befindet, um eine Rezentrierung besagter Flakons zu gestatten, nach ihrem Durchgang durch die Verengung auf dem Transportband (2).
